# EUROPÄISCHE PATENTANMELDUNG

(11) **EP 1 088 970 A2**
(43) Veröffentlichungstag der Anmeldung: **04.04.2001**
(21) Anmeldenummer: 00118842.4
(22) Anmeldetag: 31.08.2000
(51) Int. Cl.: F01N 3/32, F02D 9/02

(54) **Luftsystem**

(30) Priorität: 01.10.1999 DE 19947498
(71) Anmelder: Filterwerk Mann & Hummel GmbH, 71638 Ludwigsburg (DE)
(72) Erfinder: Paffrath, Holger, Dr., 50259 Pulheim (DE); Weber, Olaf, Dr., 71292 Friolzheim (DE)
(74) Vertreter: Voth, Gerhard, Dipl.-Ing.

(57) **Zusammenfassung**

Es wird ein Luftsystem 10 für eine Brennkraftmaschine vorgeschlagen, welches eine von einem Druckgefälle in der Ansaugluft angetriebene Turbine 11 und einen durch die Turbine 11 angetriebenen Verdichter 14 aufweist. Die Turbine ist mit einer Turbinenzuleitung 12 und eine Turbinenableitung 13 mit einer Ansaugleitung 20 verbunden. Der Verdichter 14 weist eine Verdichterzuleitung 15 und eine Verdichterableitung 16 auf. Die durch die Turbine 11 erzeugte Kälte wird durch einen Turbinenwärmetauscher 17 und Transportleitungen 27 zur Kühlung von z.B. Öl eingesetzt. Die, durch den Verdichter 14 erzeugte Wärme wird durch einen Verdichterwärmetauscher 18 und den daran angeschlossenen Transportleitungen 27 z.B. zur Erwärmung von Luft genutzt.

## Beschreibung

Die Erfindung betrifft ein Luftsystem nach dem Oberbegriff des Patentanspruches 1.

Es ist aus der WO 97/38212 ein Sekundärluftsystem für eine Brennkraftmaschine bekannt, welches mit der im Ansaugsystem vorhandenen Druckdifferenz betrieben wird. Hierzu zweigt eine Leitung vor einer Drosselklappe ab und führt zu einer Turbine, welcher eine Ableitung nachgeordnet ist. Diese Ableitung ist wiederum an das Ansaugsystem angeschlossen, wodurch das System geschlossen ist. Die Stellung der Drosselklappe ist von dem Zustand der Brennkraftmaschine abhängig. Bei Volllast ist die Drosselklappe ganz geöffnet und erzeugt somit keine Druckdifferenz. In diesem Zustand arbeitet die Turbine schwach. Sobald die Drosselklappe etwas geschlossen ist, wird eine Druckdifferenz erzeugt, durch welche die Turbine angetrieben wird. Die Energie der Turbine dient zum Betreiben eines Verdichters. Dieser Verdichter besitzt eine Zu- und eine Ableitung. Die Zuleitung kann nach dem Luftfilter an das Ansaugsystem angeschlossen sein, wodurch der Verdichter gereinigte Luft erhält und somit nicht verschmutzt. Die Ableitung des Verdichters ist an das Abgassystem angeschlossen, wodurch dem Abgas Reinluft beigemischt wird und somit eine Aufoxidation der Kohlenwasserstoffe und Kohlenmonoxide erzielt wird.

Bekanntlich wird die Einleitung von Reinluft in das Abgassystem nur in der Kaltstartphase benötigt, bis der Katalysator auf Betriebstemperatur erwärmt ist. Nach der Kaltstartphase schalten die bekannten Sekundärluftsysteme ab. Durch die Einleitung der Reinluft wird eine Nachverbrennung des unvollständig verbrannten Kraftstoffes erzeugt, welche eine zusätzliche Erwärmung des Katalysators bewirkt. Dies geschieht in Kaltstartphase der Brennkraftmaschine. Beim Start einer auf Betriebstemperatur befindlichen Brennkraftmaschine kann auf die Einleitung von Reinluft in das Abgassystem verzichtet werden.

Weiterhin ist bekannt, daß sich die Luft auf der Auslaßseite der Turbine entspannt, wodurch sie sich stark abkühlt. Diese Abkühlung kann zu Kondensat- bzw. Eisbildung führen. Auf der Auslaßseite des Verdichters ist die Luft erwärmt. Diese Wärme wird durch die Kompression der Luft erzeugt.

Bei den bekannten Sekundärluftsystemen wird die thermische Energie der Turbine und des Verdichters jedoch ungenutzt in den Motorraum abgegeben. Um eine Kondensat- oder Eisbildung zu vermeiden, kann die Turbine, wenn keine Energie für den Verdichter benötigt wird, abgeschaltet werden. Dann wird jedoch die, durch die Drosselklappe erzeugte Druckdifferenz nicht genutzt und stellt dadurch einen Energieverlust des Systems dar.

Aufgabe der Erfindung ist daher die Verbesserung der bekannten Systeme dahingehend, daß Energieverluste an einem Luftsystem nutzbar gemacht werden können. Diese Aufgabe wird durch die Merkmale des Patentanspruches 1 gelöst.

Das erfindungsgemäße Luftsystem für eine Brennkraftmaschine ist in vorteilhafter Weise geeignet, die am Luftsystem entstehenden Temperaturunterschiede zu nutzen.

Hierzu weist das Luftsystem eine Turbine auf, die mit einer Turbinenzuleitung und einer Turbinenableitung an ein Ansaugsystem der Brennkraftmaschine angeschlossen ist. Die Turbinenzuleitung ist vor und die Turbinenableitung nach einer Drosselklappe angeordnet, wodurch in Abhängigkeit von der Drosselklappe eine Druckdifferenz erzeugt wird. Diese Druckdifferenz wird als Antrieb für die Turbine genutzt. Nach der Turbine entspannt sich die Luft, wodurch sich die Luft stark abkühlt. Durch diese Abkühlung ist eine Kälteleistung von ca. 0,5 bis 2kW zu erzielen. Die maximale Leistung der Turbine wird bei geschlossener Drosselklappe erzielt, da hier die größte Druckdifferenz von ca. 700mbar herrscht. Zur Steuerung der Turbine kann eine Drossel in der Turbinenzu- oder Turbinenableitung vorgesehen sein.

Die Turbine ist so mit einem Verdichter verbunden, daß die Turbine den Verdichter antreibt. Der Verdichter weist eine Verdichterzuleitung und eine Verdichterableitung auf. Die Verdichterzuleitung kann mit dem Ansaugsystem der Brennkraftmaschine verbunden sein, wobei die Luft vor oder nach einem Filterelement entnommen werden kann. Eine Entnahme nach dem Filterelement ist vorteilhaft, da eine Verschmutzung des Verdichters verringert wird. Bei einer Luftentnahme vor dem Filterelement kann zur Luftreinigung ein zusätzliches Filter vorgesehen sein. Die Luft wird in dem Verdichter komprimiert, wodurch Wärme entsteht. In Abhängigkeit eines, im Verdichter komprimierten Massenstromes kann eine Wärmeleistung von ca. 2kW erzielt werden. Die komprimierte Luft aus dem Verdichter kann in der Kaltstartphase der Brennkraftmaschine über die Verdichterableitung in das Abgassystem zur Nachverbrennung des nichtverbrannten Kraftstoffes eingeleitet werden.

Um die Kälte- bzw. Wärmeleistung, die in dem Luftsystem entsteht, an verschiedenen Stellen in einem Kraftfahrzeug nutzen zu können, sind Mittel zur Nutzung der im Luftsystem auftretenden Temperaturunterschiede vorgesehen. Diese Mittel umfassen eine Einheit, welche die Kälte- bzw. Wärmeleistung an der Turbinen- oder Verdichterableitung aufnimmt und diese mit einer Transportleitung zum Einsatzort befördert. Der Betrieb der Turbine ist zeitlich nicht begrenzt und kann somit auch nach einer Kaltstartphase Energie erzeugen. Hierbei sind diverse Ausführungen zur Wärmeübertragung denkbar. Eine Möglichkeit stellt eine Führung eines Fluides um die Turbinen- oder Verdichterleitungen dar. Damit sich das Fluid in der Transportleitung bewegt, können Pumpen vorgesehen sein, insbesondere Pumpen, die durch die Turbine angetrieben sind. Dieses Fluid kann die Aufgabe eines Energietransporters übernehmen und in einem geschlossenen Kreislauf der Transportleitungen verbleiben oder aus der Transportleitung austreten und einen offenen Kreislauf bilden, wobei ein ausreichender Vorrat an Fluid vorgesehen sein muß, der das austretende Fluid ersetzt. Dieses Fluid kann z.B. Öl, Wasser, Luft, Emulsion oder ein Kältemittel sein.

Eine weitere Ausführung zur Wärmeübertragung kann in Form von wärmeleitenden Medien, wie z.B. Kupferblech oder -band erfolgen.

Eine weitere Möglichkeit zur Nutzung der Kälteleistung an der Tubinenableitung stellt die Kühlung der Ansaugluft dar, wobei die kalte Luft direkt über die Turbinenableitung in das Ansaugsystem eingeleitet wird. Es ist denkbar, daß die Turbine speziell zur Kühlung der Ansaugluft eingeschaltet wird. Dadurch wird ein spontaneres Ansprechen aus der Teillast in die Volllast und ein besseres Beschleunigungsverhalten aus Langsamfahrten heraus erzielt.

Es ist vorteilhaft, daß die Mittel zur Nutzung der im Luftsystem auftretenden Temperaturunterschiede einen Wärmetauscher aufweisen. Dieser Wärmetauscher kann an der Turbinenableitung und/oder an der Verdichterableitung angeordnet sein, wo er die Kälteenergie der Turbinenableitung bzw. die Wärmeenergie der Verdichterableitung aufnehmen kann. Der Wärmetauscher kann nach dem Gleichstrom- oder dem Gegenstromprinzip durchströmt sein.

Eine weitere Ausgestaltung der Erfindung sieht eine verschließbare Abzweigung an der Verdichterableitung vor. Diese Abzweigung kann bei Bedarf nach der Kaltstartphase geöffnet werden und die erwärmte Luft an Bereiche, in denen warme Luft erforderlich ist, weiterleiten. Es können Bauteile im Motorraum, wie z.B. Scheibenwaschwasser oder Luftfilter mit warmer Luft angeblasen werden, um im Winter Eisbildung zu vermeiden.

Eine besondere Ausführungsform der Erfindung sieht eine Verbindung der Abzweigung mit einem Fahrzeuginnenraum vor. Diese Abzweigung kann an ein Luftführungssystem im Fahrzeug angeschlossen sein und eine, im Fahrzeug eingebaute Luftheizung unterstützen. Die eingebauten Luftheizungen arbeiten erst nachdem die Brennkraftmaschine erwärmt ist und Wärme abstrahlt. Im Verhältnis zu dieser Luftheizung kann die Abzweigung an der Verdichterableitung sehr schnell Wärme an den Fahrzeuginnenraum abgeben. Zur Steuerung ob und wann Wärme in den Fahrzeuginnenraum abgegeben wird, kann z.B. ein Temperatursensor oder ein Schalter in dem Fahrzeuginnenraum angeordnet sein. Eine Steuerung über die Luftheizung ist selbstverständlich auch möglich.

Gemäß einer weiteren Ausgestaltung der Erfindung kann ein, an der Verdichterableitung angebrachter Wärmetauscher eine Durchleitung für die Heizungsluft der Luftheizung aufweisen, wodurch die Heizungsluft erwärmt wird. Bei dieser Ausführung kann die, durch den Verdichter komprimierte Luft ihre Wärme über den Wärmetauscher abgeben. Hierbei kann eine Abzweigung von der Verdichterableitung nach dem Wärmetauscher vorgesehen sein, wodurch der Luftstrom selbst für andere Aufgaben eingesetzt werden kann.

Eine vorteilhafte Ausbildung der Erfindung ist die Anordnung des Wärmetauschers an der Turbinenableitung, welche die Durchleitung des Kraftstoffes zur Kühlung ermöglicht, wodurch der Wirkungsgrad der Brennkraftmaschine verbessert wird.

Eine weitere Variante der Erfindung sieht die Durchleitung eines Mediums durch den Wärmetauscher vor, welches zur Batteriekühlung eingesetzt werden kann. Hierzu kann als Medium Luft verwendet werden, die über die Transportleitung zur Batterie geführt und z.B. in Form einer Kühlspirale um die Batterie geführt wird oder über eine Düse, die an der Transportleitung angeordnet ist, die Batterie anströmt.

Eine besonders vorteilhafte Ausführung der Erfindung weist einen Wärmetauscher an der Turbinenableitung auf, durch welchen Luft zur Innenraumkühlung geleitet werden kann. Diese Innenraumkühlung kann als Zusatz zu einer eingebauten Klimaanlage dienen. Die eingebauten Klimaanlagen geben im Teillast- bzw. Schubbetrieb nicht ihre maximale Leistung ab. In diesen Betriebszuständen herrscht jedoch eine hohe Druckdifferenz zwischen den Bereichen vor und nach der Drosselklappe, wodurch die Turbine angetrieben wird und somit Kälte erzeugt. Dadurch stellt der Wärmetauscher mit einer Luftkühlung eine sinnvolle Ergänzung zur vorhandenen Klimaanlage dar, insbesondere beim Stop-and-go-Verkehr. Bei Kraftfahrzeugen ohne Klimaanlage kann die Kälte der Turbine ebenfalls zur Kühlung des Innenraumes genutzt werden. Hierbei übernimmt dann das Luftsystem die Funktion einer Minimal-Klimaanlage.

Gemäß einer weiteren Variante der Erfindung kann der, an der Turbinenableitung an gebrachte Wärmetauscher eine Durchleitung für Öl aufweisen, wodurch das Luftsystem die Funktion eines Ölkühlers übernimmt. Zur Regelung der Öltemperatur kann ein Ölthermostat vorgesehen sein, der ab einer vorgegebenen Öltemperatur das Öl durch den Wärmetauscher an der Turbinenableitung leitet und somit kühlt.

Es ist vorteilhaft, das Luftsystem so zu gestalten, daß die Turbine unabhängig von dem Verdichter betrieben werden kann. Dies kann über eine mechanische Kupplung der Bauteile zueinander oder ein Ventil, welches die Luft vor dem Verdichten ausströmen läßt, realisiert werden. Somit kann die Turbine über die Druckdifferenz im Ansaugsystem Kälte erzeugen, ohne daß parallel dazu im Verdichter Wärme erzeugt wird, wenn diese nicht benötigt wird. Der Verdichter kann jedoch nicht ohne Turbine betrieben werden, wodurch ausschließlich Wärme erzeugt werden würde.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden anhand von schematischen Ausführungsbeispielen beschrieben.

Hierbei zeigt
- Figur 1: eine Prinzipskizze eines Luftsystems und
- Figur 2: eine Prinzipskizze einer Variante eines Luftsystems.

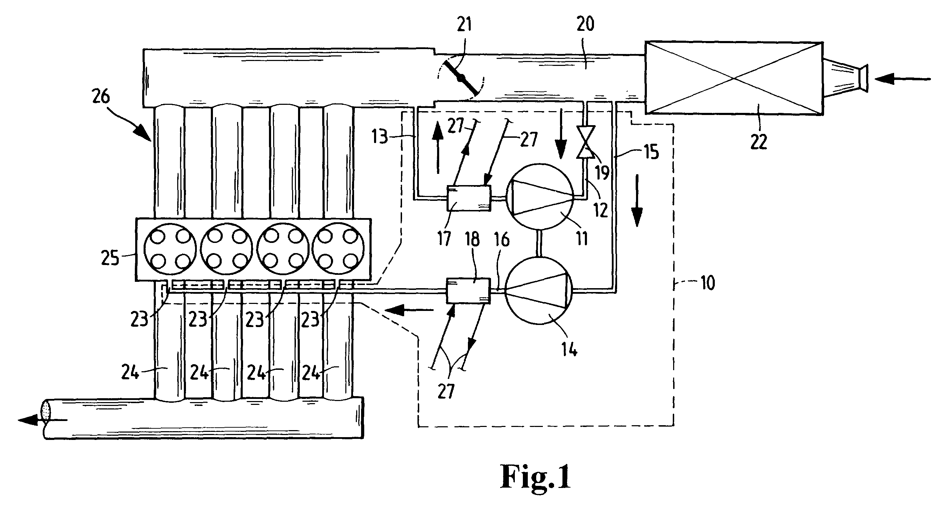

In Figur 1 ist eine Prinzipskizze eines Luftsystems 10 mit den angrenzenden Bauteilen dargestellt. Das Luftsystem 10 weist im wesentlichen eine Turbine 11 mit einer Turbinenzuleitung 12 und einer Turbinenableitung 13, einen Verdichter 14 mit einer Verdichterzuleitung 15 und einer Verdichterableitung 16, einen Turbinenwärmetauscher 17 und einen Verdichterwärmetauscher 18, sowie ein Absperrventil 19 für die Turbine 11 auf. Das Luftsystem 10 ist mit der Turbinenzuleitung 12 mit einer Ansaugleitung 20 verbunden, wobei die Turbinenzuleitung 12 vor einer Drosselklappe 21 und nach einem Filter 22 angeordnet ist. Die Turbinenableitung 13 ist nach der Drosselklappe 21 mit der Ansaugleitung 20 verbunden. Die Verdichterzuleitung 15 ist ebenfalls zwischen dem Filter 22 und der Drosselklappe 21 mit der Ansaugleitung 20 verbunden, wodurch dem Verdichter 14 gereinigte Luft zugeführt wird. Die Verdichterableitung 16 mündet mit Düsen 23 in Abgasrohre 24, welche von einer Brennkraftmaschine 25 ausgehen. Zwischen der Ansaugleitung 20 und der Brennkraftmaschine 25 ist ein Ansaugsystem 26 angeordnet.

Durch eine geschlossen Stellung der Drosselklappe 21 wird eine Druckdifferenz zwischen den Bereichen vor und nach der Drosselklappe 21 erzeugt, wodurch die Turbine 11 bei geöffnetem Absperrventil 19 angetrieben wird. Ist das Absperrventil 19 geschlossen, so wird die Turbine 11 auch bei hohen Druckdifferenzen nicht angetrieben. Daher kann das Absperrventil 19 zur kontrollierten Steuerung der Turbine 11 genutzt werden. Bei geöffnetem Absperrventil 19 und einer Druckdifferenz in der Ansaugleitung 20 wird die Turbine 11 angetrieben, wodurch sich die Luft in der Turbinenableitung 13 abkühlt. Diese Kälteenergie wird durch ein Kältemittel in dem, auf der Turbinenableitung 13 angeordneten Turbinenwärmetauscher 17 aufgenommen und über Transportleitungen 27 z.B. zu einer Ölwanne (nicht dargestellt) transportiert, in welcher das Öl abgekühlt werden soll. Durch die Transportleitungen 27 kann aber auch das zu kühlende Medium selbst, wie z.B. Sprit oder Öl geleitet werden, welches dann direkt in dem Wärmetauscher gekühlt wird. Wenn die Kälteenergie zur Kühlung der Ansaugluft benötigt wird, kann der Wärmetauscher in einen Zustand gebracht werden, in dem keine Kälteenergie für andere Funktionen entnommen wird.

Der Verdichterwärmetauscher 18 ist auf der Verdichterableitung 16 angeordnet, da sich hier die Luft durch die Verdichtung erwärmt. Durch die, mit dem Verdichterwärmetauscher 18 verbundenen Transportleitungen 27 wird Luft geführt, die einem Luftführungssystem eines Fahrzeuges (nicht dargestellt) entnommen, durch den Verdichterwärmetauscher 18 erwärmt und wieder in das Luftführungssystem zurückgeleitet wird, wodurch ein Fahrzeuginnenraum (nicht dargestellt) beheizt werden kann.

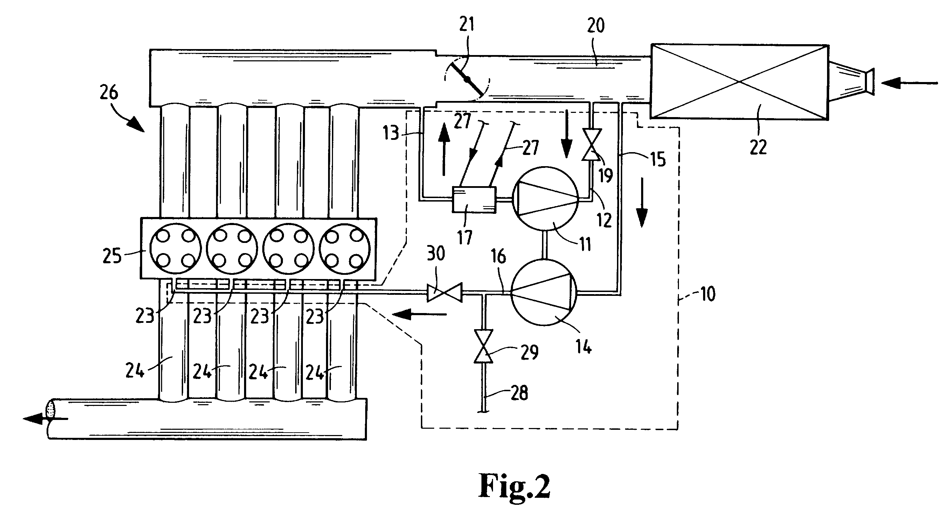

In Figur 2 ist das Luftsystem 10 gemäß Figur 1 dargestellt, wobei die Verdichterableitung 16 keinen Wärmetauscher gemäß Figur 1 aufweist, sondern über eine Abzweigung 28 verfügt, welche mit einer Warmluftabsperrventil 29 geöffnet oder verschlossen werden kann. Desweiteren ist ein Abgaszuluftabsperrventil 30 vorgesehen, wodurch im geschlossenen Zustand die Luft in die Abzweigung 28 geleitet wird. Diese Abzweigung 28 kann mit einem Luftführungssystem eines Kraftfahrzeuges (nicht dargestellt) verbunden sein. Die Verdichterableitung 16 muß jedoch nicht unbedingt mit den Abgasrohren 24 verbunden sein.

## Patentansprüche

1. Luftsystem(10), insbesondere ein Sekundärluftsystem für eine Brennkraftmaschine, aufweisend wenigstens
- eine, von einem Druckgefälle in der Ansaugluft angetriebene Turbine (11) mit einer Turbinenzuleitung (12) und einer Turbinenableitung (13) mit je einem Anschluß für das Ansaugsystem der Brennkraftmaschine,
- einen durch die Turbine (11) angetriebenen Verdichter (14) mit einer Verdichterzuleitung (15) und einer Verdichterableitung (16), **dadurch gekennzeichnet,**
daß Mittel zur Nutzung der im Luftsystem (10) auftretenden Temperaturunterschiede vorgesehen sind.

2. Luftsystem (10) nach Anspruch 1, **dadurch gekennzeichnet,** daß die Mittel zur Nutzung der im Luftsystem (10) auftretenden Temperaturunterschiede einen Turbinenwärmetauscher (17) enthalten, der an der Turbinenableitung (13) angeordnet ist.

3. Luftsystem (10) nach Anspruch 1, **dadurch gekennzeichnet,** daß die Mittel zur Nutzung der im Luftsystem (10) auftretenden Temperaturunterschiede einen Verdichterwärmetauscher (18) enthalten, der an der Verdichterableitung (16) angeordnet ist.

4. Luftsystem (10) nach Anspruch 1, **dadurch gekennzeichnet,** daß die Mittel zur Nutzung der im Luftsystem (10) auftretenden Temperaturunterschiede über eine verschließbare Abzweigung (28) verfügen, die mit der Verdichterableitung (16) verbunden ist..

5. Luftsystem (10) nach Anspruch 4, **dadurch gekennzeichnet,** daß die Abzweigung (28) mit einem Fahrzeuginnenraum verbunden ist.

6. Luftsystem (10) nach Anspruch 3, **dadurch gekennzeichnet,** daß der Verdichterwärmetauscher (18) eine Durchleitung für die Heizungsluft aufweist.

7. Luftsystem (10) nach Anspruch 2, **dadurch gekennzeichnet,** daß der Turbinenwärmetauscher (17) eine Durchleitung für den Kraftstoff aufweist.

8. Luftsystem (10) nach Anspruch 2, **dadurch gekennzeichnet,** daß der Turbinenwärmetauscher (17) eine Durchleitung für ein Medium zur Batteriekühlung aufweist.

9. Luftsystem (10) nach Anspruch 2, **dadurch gekennzeichnet,** daß der Turbinenwärmetauscher (17) eine Durchleitung für die Luft zur Innenraumkühlung aufweist.

10. Luftsystem (10) nach Anspruch 2, **dadurch gekennzeichnet,** daß der Turbinenwärmetauscher (17) eine Durchleitung für Öl aufweist.

11. Luftsystem (10) nach einem der Ansprüche 7 bis 10, **dadurch gekennzeichnet,** daß die Turbine (11) unabhängig von dem Verdichter (14) betreibbar ist.
